# EUROPÄISCHE PATENTANMELDUNG

(11) **EP 3 575 125 A1**
(43) Veröffentlichungstag der Anmeldung: **04.12.2019**
(21) Anmeldenummer: 18174733.8
(22) Anmeldetag: 29.05.2018
(51) Int. Cl.: B60L 3/00, B60L 3/04, H02M 5/458, H02H 3/087

(54) **KURZSCHLUSSSICHERER NETZSEITIGER STROMRICHTER FÜR EIN ANTRIEBSSYSTEM EINES SCHIENENFAHRZEUGS**

(71) Anmelder: Siemens Aktiengesellschaft, 80333 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)

(57) **Zusammenfassung**

Die Erfindung betrifft einen netzseitiger Stromrichter (4) für ein Antriebssystem (1) eines Schienenfahrzeugs (2), wobei der netzseitige Stromrichter (4) Halbleiter (41), einen Zwischenkreiskondensator (42) und eine Kurzschlussschutzvorrichtung (5) aufweist, wobei die Kurzschlussschutzvorrichtung (5) in einer Reihenschaltung zwischen einem der Halbleiter (41) und dem Zwischenkreiskondensator (42) angeordnet ist, wobei die Halbleiter (41) des netzseitigen Stromrichters (4) Siliziumcarbid oder Galliumnitrit aufweisen. Ferner betrifft die Erfindung ein Antriebssystem (1) mit einem derartigen netzseitigen Stromrichter (4), wobei das Antriebssystem einen Transformator (3) aufweist, wobei der Transformator eine Kurzschlussspannung (uk) im Bereich von 10% bis 30% aufweist, wobei der netzseitige Stromrichter (4) wechselspannungsseitige Eingänge aufweist, wobei die wechselspannungsseitigen Eingänge mit einer Sekundärwicklung des Transformators (3) elektrisch verbunden sind. Die Erfindung betrifft weiter ein Schienenfahrzeug (2) mit einem derartigen netzseitigen Stromrichter oder einem derartigen Antriebssystem (1), wobei das Schienenfahrzeug (2) für den Betrieb an einer Fahrleitung (7) mit Wechselspannung ausgebildet ist. Die Erfindung betrifft ferner ein Verfahren zum Schutz eines derartigen netzseitigen Stromrichters (4), eines derartigen Antriebssystems (1) oder eines derartigen Schienenfahrzeugs (2), wobei im Fehlerfall mittels der Kurzschlussschutzvorrichtung (5) ein Kurzschlussstrom durch die Halbleiter (41) des netzseitigen Stromrichters (4) abgeschaltet wird.

## Beschreibung

Die Erfindung betrifft einen netzseitigen Stromrichter für ein Antriebsystem eines Schienenfahrzeugs, wobei der netzseitige Stromrichter Halbleiter und einen Zwischenkreiskondensator aufweist. Ferner betrifft die Erfindung ein Antriebssystem mit einem derartigen netzseitigen Stromrichter sowie ein Schienenfahrzeug mit einem derartigen netzseitigen Stromrichter oder einem derartigen Antriebssystem. Die Erfindung betrifft weiter ein Verfahren zum Schutz eines derartigen netzseitigen Stromrichters, eines derartigen Antriebssystems oder eines derartigen Schienenfahrzeugs.

Bei der Reduktion von Streuinduktivitäten in Transformatoren, insbesondere bei der Anwendung in einem Schienenfahrzeug, muss ein besonderes Augenmerk auf den Schutz sensitiver Komponenten gelegt werden. Die Streuinduktivität im Transformator begrenzt den Stromanstieg im Fehlerfall. Durch die Reduktion der Streuinduktivität, beispielsweise zur Optimierung des gesamten Antriebssystems, nimmt auch die schützende Wirkung des Transformators ab.

Die Verlustleistung von einem Antriebssystem eines Schienenfahrzeugs, das für den Betrieb mit einer AC Fahrdrahtspannung, d.h. eine Fahrleitung mit Wechselspannung, ausgelegt ist, hängt wesentlich vom Wirkungsgrad des Traktionstransformators, auch einfach als Transformator bezeichnet, ab. Der Wirkungsgrad des Transformators wird bei Netzfrequenzen von 50 Hz und bei 16 2/3 Hz durch die Kupferverluste bestimmt. Nach dem Stand der Technik werden zur Begrenzung von Störströmen hohe Kurzschlussspannungen, d.h. hohe Streuinduktivitäten, der Transformatoren vorgesehen.

Der Erfindung liegt die Aufgabe zugrunde, den netzseitigen Stromrichter für ein Antriebssystem eines Schienenfahrzeugs zu verbessern.

Diese Aufgabe wird durch einen netzseitiger Stromrichter für ein Antriebssystem eines Schienenfahrzeugs gelöst, wobei der netzseitige Stromrichter Halbleiter, einen Zwischenkreiskondensator und eine Kurzschlussschutzvorrichtung aufweist, wobei die Kurzschlussschutzvorrichtung in einer Reihenschaltung zwischen einem der Halbleiter und dem Zwischenkreiskondensator angeordnet ist, wobei die Halbleiter des netzseitigen Stromrichters Siliziumcarbid oder Galliumnitrit aufweisen. Weiter wird diese Aufgabe durch ein Antriebssystem mit einem derartigen netzseitigen Stromrichter gelöst, wobei das Antriebssystem einen Transformator aufweist, wobei der Transformator eine Kurzschlussspannung im Bereich von 10% bis 30% aufweist, wobei der netzseitige Stromrichter wechselspannungsseitige Eingänge aufweist, wobei die wechselspannungsseitigen Eingänge mit einer Sekundärwicklung des Transformators elektrisch verbunden sind. Die Aufgabe wird weiter durch ein Schienenfahrzeug mit einem derartigen netzseitigen Stromrichter oder einem derartigen Antriebssystemgelöst, wobei das Schienenfahrzeug für den Betrieb an einer Fahrleitung mit Wechselspannung ausgebildet ist. Die Aufgabe wird ferner durch ein Verfahren zum Schutz eines derartigen netzseitigen Stromrichters, eines derartigen Antriebssystems oder eines derartigen Schienenfahrzeugs gelöst, wobei im Fehlerfall mittels der Kurzschlussschutzvorrichtung ein Kurzschlussstrom durch die Halbleiter des netzseitigen Stromrichters abgeschaltet wird.

Der Erfindung liegt die Erkenntnis zugrunde, dass sich der Gesamtwirkungsgrad eines Schienenfahrzeugs, dass für den Betrieb an einer Fahrleitung mit Wechselspannung ausgebildet ist, dadurch verbessern lässt, dass die Streuinduktivität des Transformators reduziert wird. Damit sinken die Kupferverluste und es steigt der Wirkungsgrad. Dies führt zu einem geringeren Energieverbrauch des Schienenfahrzeugs. Um das Antriebssystem vor Beschädigung oder Zerstörung auch bei geringer Streuinduktivität zu schützen, ist die Kurzschlussschutzvorrichtung vorhanden. Durch diese werden Kurzschlussstrome durch die Halbleiter des netzseitigen Stromrichters vermieden.

Die Kurzschlussschutzvorrichtung bietet damit den Freiheitsgrad, die Kurzschlussspannung des Transformators teilweise sogar erheblich zu reduzieren. Daraus ergibt sich in der Auslegung des Antriebssystems die Aufgabenstellung, im Fehlerfall (Kurzschluss im Zwischenkreis) hohe Kurzschlussströme in dem netzseitigen Stromrichter, Transformator und anderen Komponenten im Kurzschlusspfad beherrschen zu müssen. Insbesondere die Halbleiter im netzseitigen Stromrichter stellen hierbei eine kritische Begrenzung dar.

Für die Realisierung eines verlustarmen Antriebssystems, das für den Betrieb an einem Fahrleitung mit Wechselspannung vorgesehen ist, ist es deshalb zur Erreichung niedriger Kurzschlussspannungswerte und Streuinduktivitäten vorteilhaft, den Schutz vor Überlastung durch Kurzschlussströmen durch die Kurzschlussschutzvorrichtung sicherzustellen.

Bei der vorliegenden Ausgestaltung weisen die Halbleiter des netzseitigen Stromrichters Siliziumcarbid oder Galliumnitrit auf. Gerade diese Halbleiter eignen sich aufgrund ihrer hohen zulässigen Schaltfrequenz im besonderen Maße für den netzseitigen Stromrichter, da sich mit ihnen Störströme auf einfache Weise vermeiden lassen oder nur in Frequenzbereichen entstehen, die für den Betrieb des Schienenfahrzeugs unkritisch sind. Da diese Bauelemente jedoch Prinzip bedingt nur eine geringe Kurzschlussbelastung zulassen, ist das Antriebssystem mit einer Kurzschlussschutzvorrichtung besonders geeignet, die Vorteile des Störstromverhaltens und des hohen Wirkungsgrades gleichzeitig nutzen zu können.

Die Kurzschlussschutzvorrichtung öffnet im Fehlerfall die Verbindung zwischen Halbleiter und Zwischenkreiskondensator.

Ein Kurzschluss, beispielsweise im Zwischenkreis, führt dann nicht mehr zu einem Stromfluss durch den netzseitigen Stromrichter, weil die Energiezufuhr durch die Kurzschlussschutzvorrichtung unterbrochen ist. Aufgrund der empfindlichen Halbleiter auf Basis von Siliziumcarbid oder Galliumnitrit und der geringen Streuinduktivität ist es notwendig, dass der Schutz durch die Kurzschlussschutzvorrichtung möglichst schnell anspricht. Dafür kommen dann beispielsweise Halbleiterelemente zum Einsatz, die deutlich schneller einen Strom unterbrechen können als mechanische Schalter. Durch das schnelle Schalten können auch größere Stromanstiegsgeschwindigkeiten toleriert werden, so dass der Transformator nur noch eine geringe Streuinduktivität benötigt.

Im Folgenden wird die Erfindung anhand der in den Figuren dargestellten Ausführungsbeispiele näher beschrieben und erläutert. Es zeigen:
- FIG 1: ein bekanntes Antriebssystem,
- FIG 2: ein Ausführungsbeispiel eines Antriebssystems mit einer Kurzschlussschutzvorrichtung,
- FIG 3: ein Schienenfahrzeug.

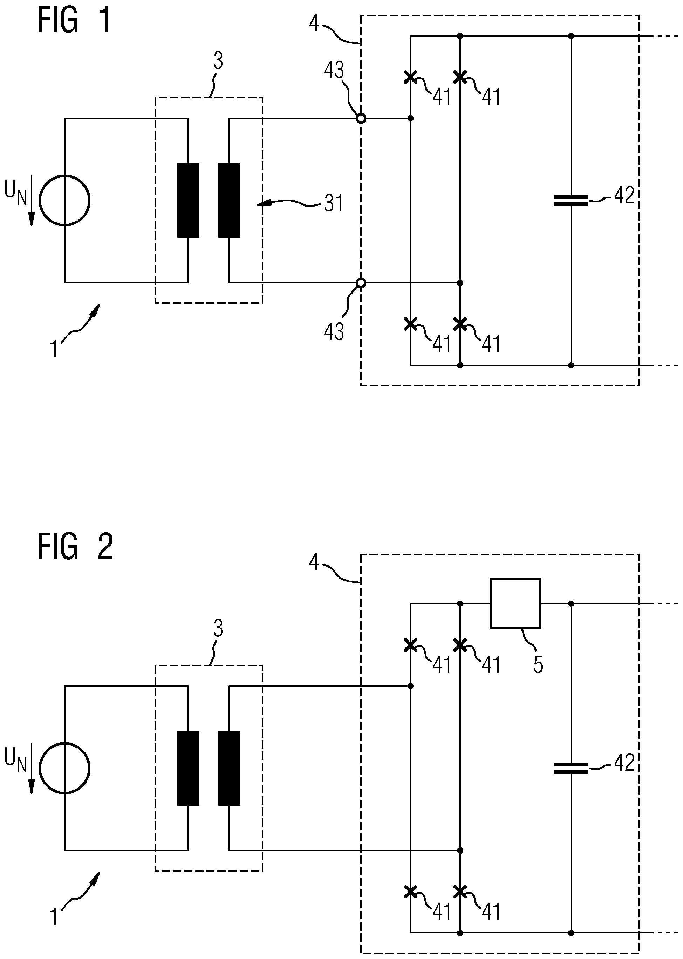

Die FIG 1 zeigt ein bekanntes Antriebssystem 1 mit einem Transformator 3 und einem Netzseitigen Stromrichter 4. Der netzseitige Stromrichter weist Halbleiter 41 auf, mit denen die Spannung am Zwischenkreiskondensator 42 geregelt werden kann. Mit den wechselspannungsseitigen Eingängen 43 ist der netzseitige Stromrichter 4 mit der Sekundärseite 31 des Transformators 3 verbunden. Stromabnehmer und Fahrleitung sind in dieser Figur vereinfacht als Spannungsquelle mit der Netzspannung U_{N} dargestellt. Üblicherweise schließt sich am Zwischenkreis des netzseitigen Stromrichters 4 ein Pulswechselrichter an, mit denen die Motoren des Schienenfahrzeugs angetrieben werden.

Die FIG 2 zeigt ein Ausführungsbeispiel eines Antriebssystems 1 mit einer Kurzschlussschutzvorrichtung 5. Zur Vermeidung von Wiederholungen wird auf die Beschreibung zur FIG 1 und auf die dort eingeführten Bezugszeichen verwiesen. Zwischen einem der Halbleiter 41 und dem Zwischenkreiskondensator 42 ist nun elektrisch in Reihe eine Kurzschlussschutzvorrichtung 5 angeordnet. Tritt ein Kurzschluss im Antriebssystem 1 auf, beispielsweise im Zwischenkreis, so führt das Ansprechen der Kurzschlussschutzvorrichtung 5 dazu, kein Strom zwischen den Halbleitern und dem Zwischenkreis fließen kann. Damit wird auch der Strom durch die Halbleiter 41 des netzseitigen Stromrichters 4 auf null reduziert, d.h. beseitigt.

Die Kurzschlussschutzvorrichtung 5, ausgebildet als DC spannungsseitige Abschalteinrichtungen, schützt das sekundärseitige Antriebssystem. Die Abschalteinrichtung ist eine DC Schalteinrichtung, die beispielsweise mechanisch, als Trennstelle durch eine kleine Sprengladung gezündet oder elektrisch ausgeführt sein kann. Die Anforderungen an die Abschaltzeiten richten sich dabei nach den Stromanstiegsgeschwindigkeiten und den Belastungsgrenzen der sensitiven Komponenten des zu schützenden Strompfades.

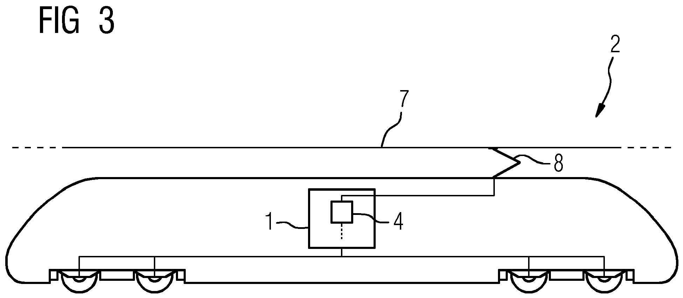

Die FIG 3 zeigt ein Schienenfahrzeug 2. Die elektrische Energie bezieht das Schienenfahrzeug aus einer Fahrleitung 7, die gegenüber dem Erdpotential eine Wechselspannung aufweist. Über einen Stromabnehmer 8 wird der Fahrleitung 7 elektrische Energie entnommen und dem Antriebssystem 1 zugeführt. Der netzseitige Stromrichter 4 ist Teil des Antriebssystems 1 Dieses Antriebssystem 1 verteilt die Energie an Motoren, die an den Rädern des Schienenfahrzeugs 2 angeordnet sind und das Schienenfahrzeug 2 antreiben.

Zusammenfassend betrifft die Erfindung einen netzseitiger Stromrichter für ein Antriebssystem eines Schienenfahrzeugs, wobei der netzseitige Stromrichter Halbleiter, einen Zwischenkreiskondensator und eine Kurzschlussschutzvorrichtung aufweist, wobei die Kurzschlussschutzvorrichtung in einer Reihenschaltung zwischen einem der Halbleiter und dem Zwischenkreiskondensator angeordnet ist, wobei die Halbleiter des netzseitigen Stromrichters Siliziumcarbid oder Galliumnitrit aufweisen. Ferner betrifft die Erfindung ein Antriebssystem mit einem derartigen netzseitigen Stromrichte, wobei das Antriebssystem einen Transformator aufweist, wobei der Transformator eine Kurzschlussspannung im Bereich von 10% bis 30% aufweist, wobei der netzseitige Stromrichter wechselspannungsseitige Eingänge aufweist, wobei die wechselspannungsseitigen Eingänge mit einer Sekundärwicklung des Transformators elektrisch verbunden sind. Die Erfindung betrifft weiter ein Schienenfahrzeug mit einem derartigen netzseitigen Stromrichter oder einem derartigen Antriebssystem, wobei das Schienenfahrzeug für den Betrieb an einer Fahrleitung mit Wechselspannung ausgebildet ist. Die Erfindung betrifft ferner ein Verfahren zum Schutz eines derartigen netzseitigen Stromrichters, eines derartigen Antriebssystems oder eines derartigen Schienenfahrzeugs, wobei im Fehlerfall mittels der Kurzschlussschutzvorrichtung ein Kurzschlussstrom durch die Halbleiter des netzseitigen Stromrichters abgeschaltet wird.

## Patentansprüche

1. Netzseitiger Stromrichter (4) für ein Antriebssystem (1) eines Schienenfahrzeugs (2), wobei der netzseitige Stromrichter (4)
- Halbleiter (41),
- einen Zwischenkreiskondensator (42) und
- eine Kurzschlussschutzvorrichtung (5)
aufweist, wobei die Kurzschlussschutzvorrichtung (5) in einer Reihenschaltung zwischen einem der Halbleiter (41) und dem Zwischenkreiskondensator (42) angeordnet ist, wobei die Halbleiter (41) des netzseitigen Stromrichters (4) Siliziumcarbid oder Galliumnitrit aufweisen.

2. Antriebssystem (1) mit einem netzseitigen Stromrichter (4) nach Anspruch 1, wobei das Antriebssystem einen Transformator (3) aufweist, wobei der Transformator eine Kurzschlussspannung (uₖ) im Bereich von 10% bis 30% aufweist, wobei der netzseitige Stromrichter (4) wechselspannungsseitige Eingänge aufweist, wobei die wechselspannungsseitigen Eingänge mit einer Sekundärwicklung des Transformators (3) elektrisch verbunden sind.

3. Schienenfahrzeug (2) mit einem netzseitigen Stromrichter nach Anspruch 1 oder einem Antriebssystem (1) nach Anspruch 2, wobei das Schienenfahrzeug (2) für den Betrieb an einer Fahrleitung (7) mit Wechselspannung ausgebildet ist.

4. Verfahren zum Schutz eines netzseitigen Stromrichters (4) nach Anspruch 1, eines Antriebssystems (1) nach Anspruch 2 oder eines Schienenfahrzeugs (2) nach Anspruch 3, wobei im Fehlerfall mittels der Kurzschlussschutzvorrichtung (5) ein Kurzschlussstrom durch die Halbleiter (41) des netzseitigen Stromrichters (4) abgeschaltet wird.
